# EUROPEAN PATENT APPLICATION

(11) **EP 4 707 144 A1**
(43) Date of publication of application: **11.03.2026**
(21) Application number: 23954291.3
(22) Date of filing: 28.09.2023
(51) Int. Cl.: B62K 21/00, B62J 45/411

(54) **STRADDLED VEHICLE WITH EPS**

(71) Applicant: Yamaha Hatsudoki Kabushiki Kaisha, Iwata-shi, Shizuoka 438-8501 (JP)
(72) Inventor: HOSOI, Takayuki, Iwata-shi, Shizuoka 438-8501 (JP); HARA, Nobuo, Iwata-shi, Shizuoka 438-8501 (JP)
(74) Representative: Stöckeler, Ferdinand
(86) International application number: PCT/JP2023/035448
(87) International publication number: WO 2025/069319

(57) **Abstract**

A torque sensor support holder is configured to cooperate with an upper bracket to support a torque sensor such that: a torque sensor is positioned forward or rearward of handlebar; an input shaft of the torque sensor extends in the up-down direction of a straddled vehicle; the axis line of the input shaft is closer in distance to the axis line of a steering shaft than the axis line of one of a pair of left and right legs of a front fork; and between the torque sensor support holder and the upper bracket, the input shaft is twisted. A handlebar support holder is configured such that it is rigidly fixed to the torque sensor support holder , and is being configured such that its positional setting is changeable such that the axis line of the handlebar is located between the axis line of the input shaft of the torque sensor positioned forward or rearward of the axis line of the steering shaft and the axis line of the input shaft at a position where it would be located if the torque sensor were assumingly positioned rearward or forward of the axis line of the steering shaft.

## Description

### Technical Field

The present teaching relates to a straddled vehicle, and more specifically relates to a straddled vehicle equipped with an electric power steering (hereinafter referred to as EPS).

### Background Art

Conventionally known are straddled vehicles. These straddled vehicles include a straddled vehicle equipped with an EPS. The straddled vehicle equipped with the EPS is configured such that an auxiliary steering force corresponding to a rider's manipulation of handlebar is applied to a front steerable wheel. A straddled vehicle of this type is disclosed in PTL 1, for example.

### Citation List

### Patent Literature

PTL 1: International Publication No. WO2022/172346

### Summary of Invention

### Technical Problem

A straddled vehicle equipped with an EPS is required to provide an improved convenience for a rider by making the positional setting of the handlebar changeable while suppressing influence on the accuracy of detection by a torque sensor. Here, it is preferable that a handlebar holder is small in size and has rigidity even if the positional setting of the handlebar is changeable.

The present teaching aims to provide a straddled vehicle equipped with an EPS, the straddled vehicle providing an improved convenience for a rider by making the positional setting of the handlebar changeable while suppressing influence on the accuracy of detection by a torque sensor, the straddled vehicle having a handlebar holder that is small in size and has rigidity.

### Solution to the Problem

The inventors of the present teaching conducted studies about measures to achieve this aim, and consequently gained the findings that it is effective to divide a handlebar holder into a torque sensor support holder and a handlebar support holder, and allowing the positional setting at which the handlebar support holder is fixed to the torque sensor support holder to be changeable within a predetermined range. Based on these findings, the present teaching was accomplished.
(1) A straddled vehicle equipped with an EPS according to an embodiment of the present teaching is
   a straddled vehicle equipped with an EPS, configured such that an auxiliary steering force corresponding to a rider's manipulation of handlebar is applied to a front steerable wheel, the straddled vehicle equipped with the EPS including:
   a front fork including a pair of left and right legs extending in the up-down direction of the straddled vehicle, the front fork rotatably supporting the front steerable wheel disposed between the pair of left and right legs;
   an upper bracket supporting the front fork such that a steering shaft extending in the up-down direction of the straddled vehicle is disposed between the pair of left and right legs, the upper bracket being configured to rotate together with the front fork about an axis line of the steering shaft;
   a handlebar holder attached to the upper bracket, the handlebar holder being configured to support the handlebar so that the handlebar holder rotates together with the upper bracket about the axis line of the steering shaft when the handlebar is manipulated; and
   a torque sensor configured to detect a steering torque that is transmitted from the handlebar holder to the upper bracket when the handlebar is manipulated, the torque sensor including an input shaft, which receives the steering torque to be detected, the torque sensor being disposed such that the input shaft extends in the up-down direction of the straddled vehicle,
   the handlebar holder including a torque sensor support holder and a handlebar support holder, the torque sensor support holder being attached to the upper bracket, and cooperating with the upper bracket to support the torque sensor, the handlebar support holder being rigidly fixed to the torque sensor support holder, and rigidly supporting the handlebar so that when the handlebar is manipulated, the handlebar support holder rotates together with both the torque sensor support holder and the handlebar about the axis line of the steering shaft,
   the torque sensor support holder being configured to cooperate with the upper bracket to support the torque sensor such that
      the torque sensor is positioned forward or rearward of the handlebar, and the input shaft of the torque sensor extends in the up-down direction of the straddled vehicle,
      an axis line of the input shaft is closer in distance to the axis line of the steering shaft than an axis line of one of the pair of left and right legs of the front fork, and
      between the torque sensor support holder and the upper bracket, the input shaft is twisted,
   the handlebar support holder being configured such that it is rigidly fixed to the torque sensor support holder , and being configured such that its positional setting is changeable where an axis line of the handlebar extends either between the axis line of the input shaft of the torque sensor positioned forward of the axis line of the steering shaft and the assumed axis line of the input shaft at a position where it would be located if the torque sensor were assumingly positioned rearward of the axis line of the steering shaft; or
   between the axis line of the input shaft of the torque sensor positioned rearward of the axis line of the steering shaft and the assumed axis line of the input shaft at a position where it would be located if the torque sensor were assumingly positioned forward of the axis line of the steering shaft.

In the straddled vehicle equipped with the EPS of (1): the torque sensor support holder is configured to cooperate with the upper bracket to support the torque sensor such that the torque sensor is positioned forward or rearward of the handlebar, and the input shaft of the torque sensor extends in the up-down direction of the straddled vehicle, such that the axis line of the input shaft is closer in distance to the axis line of the steering shaft than the axis line of one of the pair of left and right legs of the front fork, and such that the input shaft is twisted between the torque sensor support holder and the upper bracket; and the handlebar support holder is configured such that the positional setting at which the handlebar support holder is rigidly fixed to the torque sensor support holder is changeable such that the axis line of the handlebar is located between the axis line of the input shaft of the torque sensor positioned forward or rearward of the axis line of the steering shaft and the assumed axis line of the input shaft at a position where it would be located if the torque sensor were assumingly positioned rearward or forward of the axis line of the steering shaft.

This makes it possible to provide an improved convenience for a rider by making the positional setting of the handlebar changeable while suppressing influence on the accuracy of detection by the torque sensor, and also to have the handlebar holder that is smaller in size and has rigidity.

In more detail, the positional setting at which the handlebar support holder is rigidly fixed to the torque sensor support holder can be changed such that the axis line of the handlebar is located between the axis line of the input shaft of the torque sensor positioned forward or rearward of the axis line of the steering shaft and the axis line of the input shaft at a position where it would be located if the torque sensor were assumingly positioned rearward or forward of the axis line of the steering shaft. Here, the axis line of the input shaft of the torque sensor is positioned closer in distance to the axis line of the steering shaft than the axis line of one of the pair of left and right legs of the front fork. Even if the positional setting of the handlebar is changed, the distance between the handlebar and the torque sensor does not significantly change. It therefore is possible to make the positional setting of the handlebar changeable while suppressing influence on the accuracy of detection by the torque sensor. The convenience for the rider can be improved. Since the torque sensor support holder supports the torque sensor with the torque sensor being close to the handlebar, it is possible that the torque sensor support holder be small in size and that the torque sensor support holder has a rigidity. Accordingly, the handlebar holder can be small in size, and a rigidity of the handlebar holder can be obtained.

The straddled vehicle is one having a saddle-type seat, for example. The straddled vehicle is one of a type on which a rider rides astride a saddle, for example. Examples of the straddled vehicle include scooters, mopeds, snowmobiles, watercrafts, all-terrain vehicles (ATVs), and the like. The straddled vehicle includes at least one front wheel and at least one rear wheel, for example. That is, the straddled vehicle is not limited to a two-wheeled vehicle, but may be a three-wheeled vehicle of which the front wheel or rear wheel is composed of a pair of left and right wheels, or a four-wheeled vehicle of which the front wheel and rear wheel are each composed of a pair of left and right wheels. The straddled vehicle may be a leaning vehicle, for example. The leaning vehicle is one having a vehicle body configured to lean in the vehicle-left direction when turning left, and lean in the vehicle-right direction when turning right. The straddled vehicle includes a driving source, for example. The driving source is an engine, an electric motor, or a combination of an engine and an electric motor, for example.

The handlebar is, for example, a single handlebar continuously extending in the left-right direction of the straddled vehicle. The handlebar, for example, may include a left handlebar and a right handlebar disposed apart from each other in the left-right direction of the straddled vehicle. In such a case, the axis line of the handlebar includes a straight line that connects the center of the right end of the left handlebar to the center of the left end of the right handlebar, for example.

The auxiliary steering force assists the front steerable wheel to be steered in a direction corresponding to the rider's manipulation of the handlebar, for example. In other words, the auxiliary steering force makes it easy for the front steerable wheel to be steered in a direction corresponding to the rider's manipulation of the handlebar. The auxiliary steering force may be a force that prevents the front steerable wheel from being steered in a direction corresponding to the rider's manipulation of the handlebar, for example. In other words, the auxiliary steering force may be one that makes it difficult for the front steerable wheel to be steered in a direction corresponding to the rider's manipulation of the handlebar. The magnitude of the auxiliary steering force, and the like, are determined based on an output of the torque sensor, for example.

The configuration "extending in the up-down direction of the straddled vehicle" encompasses extending with an inclination in the forward-rearward direction of the straddled vehicle while the vehicle body of the straddled vehicle stands upright, for example.

The front fork has a suspension function, for example. The front fork is one of a telescopic type, for example.

The pair of left and right legs of the front fork have their axis lines parallel to each other. The axis line of the steering shaft is parallel to the axis line of each of the pair of left and right legs of the front fork, for example.

The configuration "the torque sensor support holder being attached to the upper bracket" encompasses a configuration in which the torque sensor support holder is displaceably attached to the upper bracket, for example. The configuration "the torque sensor support holder is displaceably attached to the upper bracket" encompasses a configuration in which an elastic member is disposed between the torque sensor support holder and the upper bracket, and the torque sensor support holder is attached to the upper bracket such that the position of the torque sensor support holder is settled by the elastic member, for example. The configuration "an elastic member is disposed between the torque sensor support holder and the upper bracket" encompasses a configuration in which the elastic member is disposed between a bolt that is fixed either to the torque sensor support holder and the upper bracket, or to the upper bracket and the torque sensor support holder, for example.

The configuration "the handlebar support holder is rigidly fixed to the torque sensor support holder" encompasses a configuration in which the handlebar support holder is fixed to the torque sensor support holder without interposition of an elastic member, for example. For example, each of a left portion and a right portion of the handlebar support holder has at least one "positional setting at which the handlebar support holder is rigidly fixed to the torque sensor support holder." The left portion of the handlebar support holder is located farther to the left than the center of the handlebar support holder in the left-right direction, for example. The right portion of the handlebar support holder is located farther to the right than the center of the handlebar support holder in the left-right direction. For example, in a case where the handlebar support holder is fixed to the torque sensor support holder with a bolt, the "positional setting at which the handlebar support holder is rigidly fixed to the torque sensor support holder" is the position of the bolt used for the fixation, or the position of a bolt hole through which the bolt is inserted.

The handlebar support holder has a handlebar bearing surface for bearing the handlebar, for example. The handlebar is placed on the handlebar bearing surface. The handlebar support holder bears the handlebar on one or more handlebar bearing surfaces, for example. The handlebar bearing surface bears the handlebar with the handlebar extending left and right.

The configuration of "the handlebar support holder rigidly supporting the handlebar" encompasses a configuration in which the handlebar support holder supports the handlebar without interposition of an elastic member, for example.

The configuration "the axis line of the input shaft is closer in distance to the axis line of the steering shaft than the axis line of one of the pair of left and right legs of the front fork" encompasses a configuration in which the axis line of the input shaft is closer in distance to the axis line of the steering shaft than the axis line of one of the pair of left and right legs of the front fork when viewed in the direction in which the axis line of the steering shaft extends, for example. The configuration "the axis line of the input shaft is closer in distance to the axis line of the steering shaft than the axis line of one of the pair of left and right legs of the front fork" encompasses a configuration in which the distance from the axis line of the input shaft to the axis line of the steering shaft is shorter than the distance from the axis line of the input shaft to the axis line of one of the pair of left and right legs of the front fork, for example. For example, if the distance from the axis line of the input shaft to the axis line of one of the pair of left and right legs of the front fork is different from the distance from the axis line of the input shaft to the axis line of the other of the pair of left and right legs of the front fork, the "distance from the axis line of the input shaft to the axis line of one of the pair of left and right legs of the front fork" is a longer distance than the distance from the axis line of the input shaft to the axis line of the left leg and the distance from the axis line of the input shaft to the axis line of the right leg.

The wording "between the torque sensor support holder and the upper bracket" means a partway portion of a path through which a steering torque is transmitted from the torque sensor support holder to the upper bracket, for example.

The configuration "the axis line of the handlebar is located between the axis line of the input shaft of the torque sensor positioned forward or rearward of the axis line of the steering shaft and the axis line of the input shaft at a position where it would be located if the torque sensor were assumingly positioned rearward or forward of the axis line of the steering shaft" encompasses a configuration in which, for example, the axis line of the handlebar is located between the axis line of the input shaft of the torque sensor positioned forward of the axis line of the steering shaft and the axis line of the input shaft of the torque sensor at a position where it would be located if the torque sensor were assumingly positioned rearward of the axis line of the steering shaft, but either of the axis lines of these input shafts can cross with the handlebar. The configuration "the axis line of the input shaft of the torque sensor is positioned forward or rearward of the axis line of the steering shaft" encompasses a configuration in which, for example, the axis line of the input shaft is positioned forward or rearward of the axis line of the steering shaft when viewed in the direction in which the axis line of the steering shaft extends. The "position where it would be located if the torque sensor positioned forward or rearward of the axis line of the steering shaft were assumingly positioned rearward or forward of the axis line of the steering shaft" is, for example, a position where the distance from the axis line of the input shaft of the torque sensor at this position to the axis line of the steering shaft is equal to the distance from the assumed axis line of the input shaft of the torque sensor positioned forward or rearward of the axis line of the steering shaft to the axis line of the steering shaft.

The configuration "the positional setting at which the handlebar support holder is rigidly fixed to the torque sensor support holder is changeable" encompasses a configuration in which, for example, the torque sensor support holder has a plurality of bolt holes that define the positional setting at which the handlebar support holder is rigidly fixed, and any of the plurality of bolt holes is used to fix with a bolt the handlebar support holder to the torque sensor support holder. The configuration "the positional setting at which the handlebar support holder is rigidly fixed to the torque sensor support holder is changeable" encompasses a configuration in which, for example, a bolt for fixing the handlebar support holder to the torque sensor support holder is inserted in both an elongated hole formed in the handlebar support holder and a bolt hole formed in the torque sensor support holder so that the position at which the bolt is inserted in the elongated hole is changed when the handlebar support holder is fixed to the torque sensor support holder with the bolt.

In an aspect of the present teaching, the straddled vehicle equipped with the EPS may have the following configuration.

(2) In the straddled vehicle equipped with the EPS of (1),
the handlebar support holder and the torque sensor support holder are fastened while being superposed one on the other in the up-down direction of the straddled vehicle in which a dynamic load is inputted when the straddled vehicle travels.

In the straddled vehicle equipped with the EPS of (2), the handlebar support holder and the torque sensor support holder are fastened while being superposed one on the other in the direction in which a dynamic load is inputted when the straddled vehicle travels. Since backlash of the handlebar support holder and the torque sensor support holder can be suppressed, the accuracy of detection by the torque sensor can be obtained.

In an aspect of the present teaching, the straddled vehicle equipped with the EPS may have the following configuration.

(3) In the straddled vehicle equipped with the EPS according to (1) or (2),
both an overlapping surface of the torque sensor support holder and an overlapping surface of the handlebar support holder in the up-down direction of the straddled vehicle are flat, and the overlapping surface of the handlebar support holder is smaller than the overlapping surface of the torque sensor support holder, allowing the positional setting at which the handlebar support holder is rigidly fixed to the torque sensor support holder to be changeable.

In the straddled vehicle equipped with the EPS of (3), both of the overlapping surfaces of the torque sensor support holder and the handlebar support holder in the up-down direction of the straddled vehicle are flat, which can suppress backlash of the handlebar support holder and the torque sensor support holder. It is possible to obtain an accuracy of detection by the torque sensor while allowing the positional setting of the handlebar to be changed.

In an aspect of the present teaching, the straddled vehicle equipped with the EPS may have the following configuration.

(4) In the straddled vehicle equipped with the EPS according to any one of (1) to (3),
the handlebar support holder includes left and right handlebar support holder portions disposed apart from each other in left-right direction of the straddled vehicle, and
the straddled vehicle further comprises a holder positioning mechanism for settling positions of the left and right handlebar support holder portions such that the holder positioning mechanism bears the handlebar, which extend left and right.

In the straddled vehicle equipped with the EPS of (4), the holder positioning mechanism settles the positions of the left and right handlebar support holder portions. This enables the left and right handlebar support holder portions to bear the handlebar, which extend left and right. A change in the positional setting of the handlebar is enabled with an easy change.

The holder positioning mechanism may be implemented with a coupling part that couples the left and right handlebar support holder portions, or may be implemented with a mechanism that engages each of the left and right handlebar support holder portions with the torque sensor support holder (e.g., a combination of a recess and a protrusion formed in one and the other), for example.

In an aspect of the present teaching, the straddled vehicle equipped with the EPS may have the following configuration.

(5) The straddled vehicle equipped with the EPS according to of any one of (1) to (4) further includes
a handlebar positional setting changing mechanism configured to be able to change the positional setting of the handlebar to another positional setting in forward-rearward direction of the straddled vehicle by arranging the handlebar support holder with its front and rear reversed, even if the positional setting at which the handlebar support holder is rigidly fixed to the torque sensor support holder is unchanged.

In the straddled vehicle equipped with the EPS of (5), the positional setting of the handlebar can be changed just by arranging the handlebar support holder at the same rigidly-fixed position with its front and rear reversed. For example, the number of bolt holes can be reduced in a case where each of the plurality of bolt holes defines the rigidly fixed position. This makes it possible to make the positional setting of the handlebar changeable while making the torque sensor support holder, to which the handlebar support holder is rigidly fixed, and thus the handlebar holder, small in size, and obtaining a rigidity of the handlebar holder.

The configuration of "being able to change the positional setting of the handlebar to another positional setting in forward-rearward direction of the straddled vehicle by arranging the handlebar support holder with its front and rear reversed, even if the positional setting at which the handlebar support holder is rigidly fixed to the torque sensor support holder is unchanged" encompasses a configuration in which, for example, a bolt insertion hole into which a bolt for rigidly fixing the handlebar support holder to the torque sensor support holder is inserted, is formed at a positional setting shifted forward or rearward relative to the center in the forward-rearward direction of the handlebar bearing surface provided on the handlebar support holder, and this handlebar support holder is arranged at the same rigidly-fixed positional setting with its front and rear reversed, so that the positional setting of the handlebar can be changed to another positional setting in the forward-rearward direction of the straddled vehicle.

In an aspect of the present teaching, the straddled vehicle equipped with the EPS may have the following configuration.

(6) The straddled vehicle equipped with the EPS of any one of (1) to (5) further includes
a steering torque limiter for suppressing or preventing an input of an excessive steering torque to the torque sensor,
the steering torque limiter being disposed such that its shaft portion, which is rigidly fixed to the torque sensor support holder, overlaps in the horizontal direction a bolt hole that defines a positional setting in the torque sensor support holder at which the handlebar support holder is rigidly fixed.

In the straddled vehicle equipped with the EPS of (6), the shaft portion of the steering torque limiter, which is rigidly fixed to the torque sensor support holder, overlaps in the horizontal direction the bolt hole that defines the position in the torque sensor support holder at which the handlebar support holder is rigidly fixed. The steering torque limiter can be disposed close to the positional setting at which the handlebar support holder is rigidly fixed. Even in a case where the steering torque limiter is disposed, it is possible that the torque sensor support holder to which the handlebar support holder is rigidly fixed is made small in size, and thus the handlebar holder is also made small in size, and that a rigidity of the handlebar holder is obtained.

The configuration "the shaft portion is rigidly fixed to the torque sensor support holder" encompasses a configuration in which, for example, the shaft portion is fixed to the torque sensor support holder without interposition of an elastic member. The shaft portion may be, for example, one of a bolt that is used to attach the torque sensor support holder to the upper bracket. In such a case, the torque sensor support holder, and thus the handlebar holder, can be made smaller, and a rigidity of the handlebar holder can be further obtained.

In an aspect of the present teaching, the straddled vehicle equipped with the EPS may have the following configuration.

(7) In the straddled vehicle equipped with the EPS of any one of (1) to (6),
the torque sensor support holder, having a plurality of bolt holes for changing the positional setting of the handlebar, is positioned between the pair of left and right legs of the front fork, and
the plurality of bolt holes, defining a positional setting at which the handlebar support holder is rigidly fixed to the torque sensor support holder, are positioned between the pair of left and right legs of the front fork.

In the straddled vehicle equipped with the EPS of (7), the torque sensor support holder, and the positional setting at which the handlebar support holder is rigidly fixed to the torque sensor support holder are each positioned between the pair of left and right legs of the front fork. The handlebar holder can be positioned between the pair of left and right legs of the front fork. It is possible to make the positional setting of the handlebar changeable while making the handlebar holder small in size and obtaining a rigidity of the handlebar holder.

In an aspect of the present teaching, the straddled vehicle equipped with the EPS may have the following configuration.

(8) In the straddled vehicle equipped with the EPS of any one of (1) to (7),
an attaching bolt used to attach the torque sensor support holder to the upper bracket and a fixing bolt used to rigidly fix the handlebar support holder to the torque sensor support holder overlap each other in the horizontal direction,
the torque sensor support holder is positioned between the pair of left and right legs of the front fork, and
the fixing bolt, defining the positional setting at which the handlebar support holder is rigidly fixed to the torque sensor support holder, is positioned between the pair of left and right legs of the front fork.

In the straddled vehicle equipped with the EPS of (8), the torque sensor support holder, and the positional setting at which the handlebar support holder is rigidly fixed to the torque sensor support holder are each positioned between the pair of left and right legs of the front fork. This enables the handlebar holder to be positioned between the pair of left and right legs of the front fork. Since the attaching bolt and the fixing bolt overlap each other in the horizontal direction, the height of the handlebar holder is able to be suppressed. It is possible to make the positional setting of the handlebar changeable and to make the handlebar holder small in size, while obtaining a rigidity of the handlebar holder.

These and other objects, features, aspects, and advantages of the present teaching will become more apparent from the following detailed description of embodiment(s) of the present teaching, with reference to the accompanying drawings. As used herein, the term "and/or" includes any and all combinations of one or more of the associated listed items. As used herein, the terms "including," "comprising," or "having," and variations thereof specify the presence of stated features, steps, operations, elements, components, and/or equivalents thereof, and can include one or more of steps, operations, elements, components, and/or their groups. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by the drawings or descriptions provided below.

### Advantageous Effects of Invention

The present teaching is able to provide an improved convenience for a rider by making the positional setting of the handlebar changeable while suppressing influence on the accuracy of detection by a torque sensor, and also able to have a handlebar holder that is a small in size and has rigidity.

### Brief Description of Drawings

[FIG. 1] A conceptual diagram showing a configuration of a straddled vehicle equipped with an EPS according to an embodiment of the present teaching
[FIG. 2] A conceptual diagram showing a variation of a handlebar support holder that can be adopted in the straddled vehicle equipped with the EPS according to the embodiment of the present teaching
[FIG. 3] A conceptual diagram showing a steering torque limiter that can be adopted in the straddled vehicle equipped with the EPS according to the embodiment of the present teaching

### Description of Embodiments

In the following, details of a straddled vehicle equipped with an EPS according to an embodiment of the present teaching will be described with reference to the drawings. Here, it should be noted that the embodiment described below is merely an example. The present teaching should not be construed as being limited in any way by the embodiment described below.

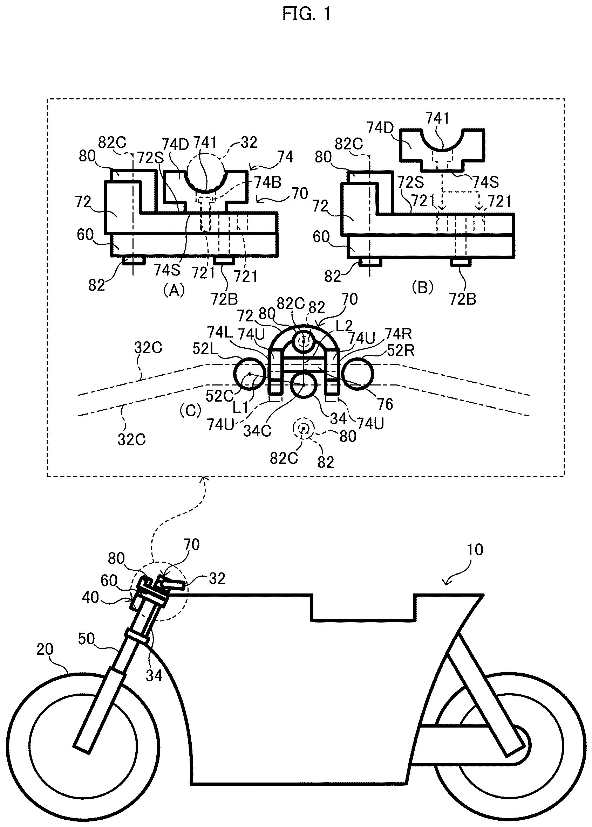

Referring to FIG. 1, a straddled vehicle 10 equipped with an EPS (hereinafter, sometimes referred to simply as straddled vehicle 10) according to an embodiment of the present teaching will be described. The straddled vehicle 10 equipped with the EPS is configured such that an auxiliary steering force corresponding to a rider's manipulation of handlebar 32 is applied to a front steerable wheel 20.

The straddled vehicle 10 equipped with the EPS includes a front fork 50, an upper bracket 60, a handlebar holder 70, and a torque sensor 80. The front fork 50 includes a pair of left and right legs 52L, 52R, which extends in up-down direction of the straddled vehicle 10. The front fork 50 rotatably supports the front steerable wheel 20, which is disposed between the pair of left and right legs 52L, 52R. The upper bracket 60 supports the front fork 50 such that a steering shaft 34, which extends in the up-down direction of the straddled vehicle 10, is disposed between the pair of left and right legs 52L, 52R, and the upper bracket 60 is configured to rotate together with the front fork 50 about the axis line 34C of the steering shaft 34. The handlebar holder 70 is attached to the upper bracket 60, and is configured to support the handlebar 32 so that the handlebar holder 70 rotates together with the upper bracket 60 about the axis line 34C of the steering shaft 34 when the handlebar 32 is manipulated. The torque sensor 80 is configured to detect a steering torque that is transmitted from the handlebar holder 70 to the upper bracket 60 when the handlebar 32 is manipulated. The torque sensor 80 includes an input shaft 82, which receives a steering torque to be detected. The torque sensor 80 is disposed such that the input shaft 82 extends in the up-down direction of the straddled vehicle 10.

The handlebar holder 70 includes a torque sensor support holder 72 and a handlebar support holder 74. The torque sensor support holder 72 is attached to the upper bracket 60, and cooperates with the upper bracket 60 to support the torque sensor 80. The handlebar support holder 74 is rigidly fixed to the torque sensor support holder 72, and rigidly supports the handlebar 32 so that when the handlebar 32 is manipulated, the handlebar support holder 74 rotates together with both the torque sensor support holder 72 and the handlebar 32 about the axis line 34C of the steering shaft 34. In an example illustrated in FIG. 1, the handlebar support holder 74 includes a lower holder portion 74D (see (A) and (B) of FIG. 1) and an upper holder portion 74U (see (C) of FIG. 1). The lower holder portion 74D has a groove 741 extending in left-right direction. A surface that defines the groove 741 functions as a handlebar bearing surface. With the handlebar 32 disposed in the groove 741, the upper holder portion 74U is fixed to the lower holder portion 74D. Consequently, the handlebar 32 is rigidly supported by the upper holder portion 74U and the lower holder portion 74D.

The torque sensor support holder 72 is configured to cooperate with the upper bracket 60 to support the torque sensor 80 such that: the torque sensor 80 is positioned forward or rearward of the handlebar 32; the input shaft 82 of the torque sensor 80 extends in the up-down direction of the straddled vehicle 10; the axis line 82C of the input shaft 82 is closer to the axis line 34C of the steering shaft 34 than the axis line 52C of one of the pair of left and right legs 52L, 52R of the front fork 50; and between the torque sensor support holder 72 and the upper bracket 60, the input shaft 82 is twisted. In the example illustrated in FIG. 1, a distance L2 from the axis line 34C to the axis line 82C is shorter than a distance L1 from the axis line 34C to the axis line 52C (see (C) of FIG. 1).

The handlebar support holder 74 is configured such that a positional setting at which the handlebar support holder 74 is rigidly fixed to the torque sensor support holder 72 can be changed such that the axis line 32C of the handlebar 32 is located between the axis line 82C of the input shaft 82 of the torque sensor 80 positioned forward or rearward of the axis line 34C of the steering shaft 34 and the axis line 82C of the input shaft 82 at a position where it would be located if the torque sensor 80 were assumingly positioned rearward or forward of the axis line 34C of the steering shaft 34 (see (B) and (C) of FIG. 1). In the example illustrated in FIG. 1, a distance from the axis line 82C of the input shaft 82 of the torque sensor 80 at the position where it would be located if the torque sensor 80 were assumingly positioned farther rearward than the steering shaft 34 to the axis line 34C of the steering shaft 34 is equal to the distance L2 from the axis line 82C of the input shaft 82 of the torque sensor 80 positioned farther forward than the axis line 34C of the steering shaft 34 to the axis line 34C of the steering shaft 34.

The straddled vehicle 10 equipped with the EPS is capable of providing an improved convenience for a rider by making the positional setting of the handlebar 32 changeable while suppressing influence on the accuracy of detection by the torque sensor 80, and also capable of having the handlebar holder 70 that is small in size and has rigidity.

In the example illustrated in FIG. 1, the handlebar support holder 74 and the torque sensor support holder 72 are fastened while being superposed one on the other in the up-down direction of the straddled vehicle 10 in which a dynamic load is inputted when the straddled vehicle 10 travels (see (A) of FIG. 1).

In the example illustrated in FIG. 1, both an overlapping surface of the torque sensor support holder 72 and an overlapping surface of the handlebar support holder 74 in the up-down direction of the straddled vehicle 10 are flat, and the overlapping surface 74S of the handlebar support holder 74 is smaller than the overlapping surface 72S of the torque sensor support holder 72 allowing the positional setting at which the handlebar support holder 74 is rigidly fixed to the torque sensor support holder 72 to be changeable (see (A) of FIG. 1).

In the example illustrated in FIG. 1, the handlebar support holder 74 includes left and right handlebar support holder portions 74L, 74R, which are disposed apart from each other in the left-right direction of the straddled vehicle 10 (see (C) of FIG. 1). The straddled vehicle 10 further includes a holder positioning mechanism 76. The holder positioning mechanism 76 settles the positions of the left and right handlebar support holder portions 74L, 74R such that the holder positioning mechanism 76 bears the handlebar 32 with the handlebar 32 extending left and right. In the example illustrated in FIG. 1, the holder positioning mechanism 76 is a coupling part that couples the left and right handlebar support holder portions 74L, 74R (see (C) of FIG. 1).

In the example illustrated in FIG. 1, the torque sensor support holder 72, which has a plurality of bolt holes 721 for changing the positional setting of the handlebar 32, is positioned between the pair of left and right legs 52L, 52R of the front fork 50, and the plurality of bolt holes 721, which define the positional setting at which the handlebar support holder 74 is rigidly fixed to the torque sensor support holder 72, are positioned between the pair of left and right legs 52L, 52R of the front fork 50 (see (A) and (C) of FIG. 1).

In the example illustrated in FIG. 1: an attaching bolt 72B, which is used to attach the torque sensor support holder 72 to the upper bracket 60, and a fixing bolt 74B, which is used to rigidly fix the handlebar support holder 74 to the torque sensor support holder 72, overlap each other in the horizontal direction; the torque sensor support holder 72 is positioned between the pair of left and right legs 50L, 50R of the front fork 50; and the fixing bolt 74B, which defines the positional setting at which the handlebar support holder 74 is rigidly fixed to the torque sensor support holder 72, is positioned between the pair of left and right legs 50L, 50R of the front fork 50 (see (A) and (C) of FIG. 1).

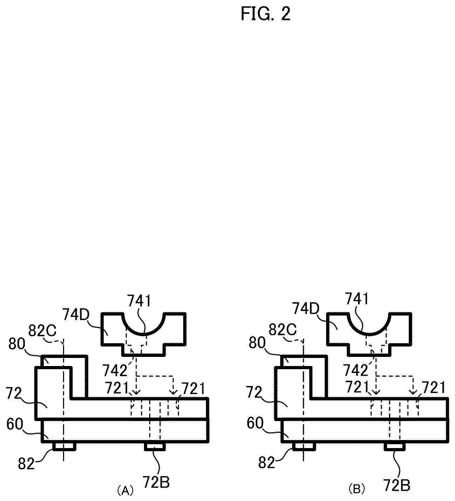

In an example illustrated in FIG. 2, the straddled vehicle 10 further includes a handlebar positional setting changing mechanism 78. The handlebar positional setting changing mechanism 78 is configured to be able to change the positional setting of the handlebar 32 to another positional setting in forward-rearward direction of the straddled vehicle 10 by arranging the handlebar support holder 74 with its front and rear reversed, even if the positional setting at which the handlebar support holder 74 is rigidly fixed to the torque sensor support holder 72 is unchanged. In the example illustrated in FIG. 2, the handlebar support holder 74 has a bolt insertion hole 742 into which a bolt for rigidly fixing the handlebar support holder 74 to the torque sensor support holder 72 is inserted. The bolt insertion hole 742 is formed at a position shifted farther forward or farther rearward from the center in the forward-rearward direction of the handlebar bearing surface (the surface that defines the groove 741) formed on the handlebar support holder 74.

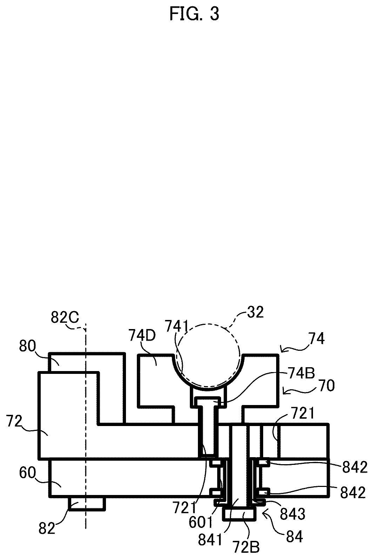

In an example illustrated in FIG. 3, the straddled vehicle 10 further includes a steering torque limiter 84. The steering torque limiter 84 suppresses or prevents an input of an excessive steering torque to the torque sensor 80. The steering torque limiter 84 is arranged such that its shaft portion 841, which is rigidly fixed to the torque sensor support holder 72, overlaps in the horizontal direction a bolt hole 721, which defines the position in the torque sensor support holder 72 at which the handlebar support holder 74 is rigidly fixed. In the example illustrated in FIG. 3, the shaft portion 841 is a shaft portion of the attaching bolt 72B. The shaft portion 841 is partially received in an insertion hole 601 formed in the upper bracket 60. Of the shaft portion 841, a portion received in the insertion hole 601 is settled in its position and held by a pair of upper and lower rubber rings 842. Of the shaft portion 841, the portion received in the insertion hole 601 is inserted through a collar 843. If the torque sensor 80 receives an excessive steering torque, the shaft portion 841 moves in the horizontal direction while compressing the pair of upper and lower rubber rings 842. The shaft portion 841 then comes into contact with an inner surface of the insertion hole 601, so that the movement in the horizontal direction is restrained. In this manner, the steering torque limiter 84 suppresses or prevents an input of an excessive steering torque to the torque sensor 80.

### (Other Embodiments)

The embodiments and variations, of which at least either one of description or illustration has been given herein, are for ease of understanding the present disclosure, and not for limiting the concept of the present disclosure. The foregoing embodiments and variations may be altered and/or adapted without departing from the spirit of the present disclosure. The spirit encompasses equivalent elements, modifications, omissions, combinations (for example, a combination of features of any embodiment and any variation), adaptations and/or alterations as would be appreciated by those skilled in the art based on the embodiments disclosed herein. The limitations in Claims are to be broadly interpreted based on the language employed in Claims and not limited to embodiments and variations described herein or during the prosecution of the present application. The embodiments and variations are to be construed as non-exclusive. For example, in this Description, the terms "preferably," "may," and "possible," are non-exclusive and mean "preferably, but not limited to," "may, but not limited to," and "possibly, but not limited to," respectively.

### Reference Signs List

- 10: straddled vehicle equipped with EPS
- 20: front steerable wheel
- 32: handlebar
- 32C: axis line
- 34: steering shaft
- 34C: axis line
- 50: front fork
- 52L: leg
- 52R: leg
- 60: upper bracket
- 70: handlebar holder
- 72: torque sensor support holder
- 721: bolt hole
- 72B: attaching bolt
- 72S: overlapping surface
- 74: handlebar support holder
- 74B: fixing bolt
- 74S: overlapping surface
- 74L: left handlebar support holder portion
- 74R: right handlebar support holder portion
- 76: holder positioning mechanism
- 78: handlebar positional setting changing mechanism
- 80: torque sensor
- 82: input shaft
- 82C: axis line
- 84: steering torque limiter
- 841: shaft portion

## Claims

1. A straddled vehicle equipped with an EPS, configured such that an auxiliary steering force corresponding to a rider's manipulation of handlebar is applied to a front steerable wheel, the straddled vehicle equipped with the EPS comprising:
a front fork including a pair of left and right legs extending in the up-down direction of the straddled vehicle, the front fork rotatably supporting the front steerable wheel disposed between the pair of left and right legs;
an upper bracket supporting the front fork such that a steering shaft extending in the up-down direction of the straddled vehicle is disposed between the pair of left and right legs, the upper bracket being configured to rotate together with the front fork about an axis line of the steering shaft;
a handlebar holder attached to the upper bracket, the handlebar holder being configured to support the handlebar so that the handlebar holder rotates together with the upper bracket about the axis line of the steering shaft when the handlebar is manipulated; and
a torque sensor configured to detect a steering torque that is transmitted from the handlebar holder to the upper bracket when the handlebar is manipulated, the torque sensor including an input shaft, which receives the steering torque to be detected, the torque sensor being disposed such that the input shaft extends in the up-down direction of the straddled vehicle,
the handlebar holder including a torque sensor support holder and a handlebar support holder, the torque sensor support holder being attached to the upper bracket, and cooperating with the upper bracket to support the torque sensor, the handlebar support holder being rigidly fixed to the torque sensor support holder, and rigidly supporting the handlebar so that when the handlebar is manipulated, the handlebar support holder rotates together with both the torque sensor support holder and the handlebar about the axis line of the steering shaft,
the torque sensor support holder being configured to cooperate with the upper bracket to support the torque sensor such that
the torque sensor is positioned forward or rearward of the handlebar, and the input shaft of the torque sensor extends in the up-down direction of the straddled vehicle,
an axis line of the input shaft is closer in distance to the axis line of the steering shaft than an axis line of one of the pair of left and right legs of the front fork, and
between the torque sensor support holder and the upper bracket, the input shaft is twisted,
the handlebar support holder being configured such that it is rigidly fixed to the torque sensor support holder, and being configured such that its positional setting is changeable where an axis line of the handlebar extends either between the axis line of the input shaft of the torque sensor positioned forward of the axis line of the steering shaft and the assumed axis line of the input shaft at a position where it would be located if the torque sensor were assumingly positioned rearward of the axis line of the steering shaft; or
between the axis line of the input shaft of the torque sensor positioned rearward of the axis line of the steering shaft and the assumed axis line of the input shaft at a position where it would be located if the torque sensor were assumingly positioned forward of the axis line of the steering shaft.

2. The straddled vehicle equipped with the EPS according to claim 1, wherein
the handlebar support holder and the torque sensor support holder are fastened while being superposed one on the other in the up-down direction of the straddled vehicle in which a dynamic load is inputted when the straddled vehicle travels.

3. The straddled vehicle equipped with the EPS according to claim 1 or 2, wherein
both an overlapping surface of the torque sensor support holder and an overlapping surface of the handlebar support holder in the up-down direction of the straddled vehicle are flat, and the overlapping surface of the handlebar support holder is smaller than the overlapping surface of the torque sensor support holder, allowing the positional setting at which the handlebar support holder is rigidly fixed to the torque sensor support holder to be changeable.

4. The straddled vehicle equipped with the EPS according to any one of claims 1 to 3, wherein
the handlebar support holder includes left and right handlebar support holder portions disposed apart from each other in left-right direction of the straddled vehicle, and
the straddled vehicle further comprises a holder positioning mechanism for settling positions of the left and right handlebar support holder portions such that the holder positioning mechanism bears the handlebar, which extend left and right.

5. The straddled vehicle equipped with the EPS according to any one of claims 1 to 4,
further comprising a handlebar positional setting changing mechanism configured to be able to change the positional setting of the handlebar to another positional setting in forward-rearward direction of the straddled vehicle by arranging the handlebar support holder with its front and rear reversed, even if the positional setting at which the handlebar support holder is rigidly fixed to the torque sensor support holder is unchanged.

6. The straddled vehicle equipped with the EPS according to any one of claims 1 to 5,
further comprising a steering torque limiter for suppressing or preventing an input of an excessive steering torque to the torque sensor,
the steering torque limiter being disposed such that its shaft portion, which is rigidly fixed to the torque sensor support holder, overlaps in the horizontal direction a bolt hole that defines a positional setting in the torque sensor support holder at which the handlebar support holder is rigidly fixed.

7. The straddled vehicle equipped with the EPS according to any one of claims 1 to 6, wherein
the torque sensor support holder, having a plurality of bolt holes for changing the positional setting of the handlebar, is positioned between the pair of left and right legs of the front fork, and
the plurality of bolt holes, defining a positional setting at which the handlebar support holder is rigidly fixed to the torque sensor support holder, are positioned between the pair of left and right legs of the front fork.

8. The straddled vehicle equipped with the EPS according to any one of claims 1 to 7, wherein
an attaching bolt used to attach the torque sensor support holder to the upper bracket and a fixing bolt used to rigidly fix the handlebar support holder to the torque sensor support holder overlap each other in the horizontal direction,
the torque sensor support holder is positioned between the pair of left and right legs of the front fork, and
the fixing bolt, defining the positional setting at which the handlebar support holder is rigidly fixed to the torque sensor support holder, is positioned between the pair of left and right legs of the front fork.
